# EUROPÄISCHE PATENTSCHRIFT

(11) **EP 2 315 415 B1**
(45) Veröffentlichungstag und Bekanntmachung des Hinweises auf die Patenterteilung: **02.07.2014**
(21) Anmeldenummer: 10175245.9
(22) Anmeldetag: 03.09.2010
(51) Int. Cl.: H04L 29/08, H04W 8/18, H04M 1/725

(54) **Verfahren und Endgerät zum Ausführen einer Applikation in dem Endgerät**
Method and terminal for carrying out an application in the terminal
Procédé et terminal destinés à développer une application dans le terminal

(30) Priorität: 21.10.2009 DE 102009050244
(43) Veröffentlichungstag der Anmeldung: 27.04.2011
(73) Patentinhaber: Vodafone Holding GmbH, 40213 Düsseldorf (DE)
(72) Erfinder: Müller, Frank, 40237, Düsseldorf (DE)
(74) Vertreter: Jostarndt, Hans-Dieter

(56) Entgegenhaltungen:
- EP-A1- 1 895 743
- EP-A1- 2 059 006
- WO-A1-2008/062090
- US-B1- 6 671 522
- "Digital cellular telecommunications system (Phase 2+); Specification of the SIM Application Toolkit for the Subscriber Identity Module - Mobile Equipment (SIM - ME) interface (3GPP TS 51.014 version 4.5.0 Release 4); ETSI TS 151 014", ETSI STANDARDS, LIS, SOPHIA ANTIPOLIS CEDEX, FRANCE, Bd. 3-T3, Nr. V4.5.0, 1. Dezember 2004 (2004-12-01), XP014028445, ISSN: 0000-0001

## Beschreibung

Die Erfindung bezieht sich auf die Ausführung von Nutzerapplikation in einem Endgerät. Insbesondere betrifft die Erfindung ein Verfahren zum Ausführen einer Nutzerapplikation in einem Endgerät und ein zur Durchführung des Verfahrens geeignetes Endgerät sowie eine SIM-Karte.

Moderne mobile Kommunikationsendgeräte verfügen über eine Vielzahl von Funktionen, die in der Regel anhand von Applikationen implementiert sind, die in den Kommunikationsendgeräten ausgeführt werden. Die Applikationen können innerhalb eines auch als Mobilstation bezeichneten Handgeräts bereitgestellt und ausgeführt werden oder in einer mit der Mobilstation verbundenen SIM-Karte des mobilen Kommunikationsendgeräts. Die SIM-Karten sind dafür vorgesehen, Mobilfunkteilnehmer gegenüber Mobilfunknetzwerken zu identifizieren und/oder zu authentifizieren. Sie werden in der Regel von dem Mobilfunkbetreiber ausgegeben, mit dem der Endgerätenutzer einen Mobilfunkvertrag geschlossen hat. Daher enthalten SIM-Karten oftmals Applikationen, die von diesem Mobilfunkanbieter bereitgestellt werden. Hierbei kann es sich beispielsweise um Applikationen handeln, die es ermöglichen auf bestimmte Dienste des Mobilfunknetzwerks des Betreibers zuzugreifen, beispielsweise auf Informationsdienste, die dem Endgerätenutzer aktuelle Informationen über das Mobilfunknetzwerk zugänglich machen.

Die Applikationen können in der Regel über Menüs aufgerufen werden, die an einer graphischen Benutzeroberfläche der Kommunikationsendgeräte dargestellt werden. Den von der SIM-Karte bereitgestellten Applikationen ist dabei in der Regel ebenfalls wenigstens ein Menüpunkt zugeordnet. Aufgrund der Vielzahl von verfügbaren Applikationen wird die erforderliche Menüstruktur jedoch zunehmend komplexer und damit von den Nutzern schwieriger zu überschauen zu bedienen. Dies führt oftmals dazu, dass Applikationen, die in unteren Ebenen der Menüstruktur zugänglich gemacht werden, von den Endgerätenutzern nicht ausgeführt werden.

Besonders häufig verwendeten Applikationen können vorgegebene Tasten der Endgeräte zugeordnet werden, die betätigt werden können, um die entsprechenden Applikationen einfach und schnell aufrufen und starten zu können. Darüber hinaus können Applikationen oftmals anhand von sogenannten Kurzwahlnummern aufgerufen werden. Hierzu wer den den Applikationen jeweils Nummern zugeordnet, die beispielsweise ein- oder zweistellig sind. Aufgrund der Eingabe einer solchen Nummer an einer Tastatur des Endgeräts wird die zugehörige Applikation ermittelt und gestartet.

Die WO 2008/062090 beschreibt ein mobiles Endgerät, beim dem durch Eingabe einer Tastenkombination eine Funktion einer SIM-Karte gestartet werden kann, welche es gestattet, aus einem Menü eine Applikation auszuwählen und zu starten die in der SIM-Karte unter der Tastenkombination registriert ist. Die Übermittlung der Tastenkombination an die SIM-Karte erfolgt aufgrund eines *Call Control* Mechanismus, wobei die Eingabe der Tastenkombination durch den Druck aufn einen Anrufknopf beendet wird, woraufhin die Tastenkombination an die SIM-Karte übergeben wird.

Aus der EP 2 059 006 A1 geht ein mobiles Endgerät mit einer SIM-Karte hervor, in der Zuordnungen von Rufnummern und Kurzwahlnummern gespeichert werden können. Eingegebene Kurzwahlnummern werden von der SIM-Karte erkannt, und die zugehörige Rufnummer von der SIM-Karte gewählt, indem die Rufnummer durch einen *Call Control*-Mechanismus an das Endgerät gesendet wird.

Die EP 1 895 743 A1 offenbart ein Endgerät mit einer Chipkarte, die bei Erhalt eines Kommandos prüft, ob das Kommando die Ausführung weiter Applikationen erfordert. Dies geschieht im Zusammenhang mit einer drahtlosen ZigBee-Kommunikation der Chipkarte. Die US 6,671,522 B1 beschreibt ein mobiles Endgerät mit einem Terminal und einer SIM-Karte, in dem die SIM-Karte die Ausführung von Applikationen in dem Terminal steuern kann.

Es ist eine Aufgabe der vorliegenden Erfindung, die Auswahl und das Starten von Applikationen in einem Endgerät, insbesondere von Applikationen, die von einer SIM-Karte des Endgeräts bereitgestellt werden, zu vereinfachen.

Die Aufgabe wird durch ein Verfahren mit den Merkmalen des Patentanspruchs 1, durch ein Ehdgerät mit den Merkmalen des Patentanspruchs 10 und durch eine SIM-Karte mit den Merkmalen des Patentanspruchs 11 gelöst. Ausführungsformen des Verfahrens, des Endgeräts und der SIM-Karte sind in den abhängigen Ansprüchen angegeben.

Gemäß einem ersten Aspekt der Erfindung wird ein Verfahren zum Ausführen einer Nutzerapplikation in einem eine SIM-Karte aufweisenden Endgerät mit den folgenden Schritten vorgeschlagen:
- Bereitstellen einer Zuordnung zwischen der Nutzerapplikation und einer Kennung in der SIM-Karte,
- Erfassen der Kennung in dem Endgerät und Übermitteln der erfassten Kennung an die SIM-Karte,
- Ermitteln der Nutzerapplikation der SIM-Karte anhand der erhaltenen Kennung unter Verwendung der Zuordnung und
- Starten der Nutzerapplikation mittels eines in der SIM-Karte generierten Steuerbefehls.

Gemäß einem zweiten Aspekt der Erfindung wird ein Endgerät zum Ausführen einer Nutzerapplikation bereitgestellt. Das Endgerät umfasst eine SIM-Karte, in der eine Zuordnung zwischen der Nutzerapplikation und einer Kennung verfügbar ist. Ferner ist eine in der SIM-Karte enthaltene Erfassungseinrichtung vorgesehen, die dazu ausgestaltet ist, die in dem Endgerät erfasste Kennung zu empfangen, anhand der Kennung unter Verwendung der Zuordnung die Nutzerapplikation zu ermitteln und die Nutzerapplikation mittels eines in der SIM-Karte generierten Steuerbefehls zu starten.

Ein weiterer Aspekt der Erfindung betrifft eine SIM-Karte zur Verwendung in einem Endgerät. In der SIM-Karte ist eine Zuordnung zwischen der Nutzerapplikation und einer Kennung verfügbar. Zudem umfasst die SIM-Karte eine Erfassungseinrichtung, die dazu ausgestaltet ist, die in dem Endgerät erfasste Kennung zu empfangen, anhand der Kennung unter Verwendung der Zuordnung die Nutzerapplikation zu ermitteln und die Nutzerapplikation mittels eines in der SIM-Karte generierten Steuerbefehls zu starten.

Die Erfindung beinhaltet die Idee, eine Nutzerapplikation durch eine der Applikation zugeordnete Kennung auswählen und starten zu können. Hierdurch wird der Zugriff auf die Nutzerapplikation vereinfacht. Die Kennung wird vorteilhaft in der SIM-Karte ausgewertet, wodurch der vorgesehene Mechanismus unabhängig von der Mobilstation bzw. dem eigentlichen Endgerät ist. Das Endgerät ist vorzugsweise als mobiles Endgerät, insbesondere als mobiles Kommunikationsendgerät ausgestaltet.

Durch Eingabe einer Kennung lassen sich grundsätzlich beliebige Nutzerapplikationen starten. Hierunter sind insbesondere Applikationen zu verstehen, die in dem Endgerät ausgeführt werden und mit dem Nutzer des Endgeräts in Wechselwirkung treten, indem sie Informationen für den Nutzer anzeigen und/oder Eingaben des Nutzers empfangen. Nutzerapplikationen können insoweit als Anwendungsprogramme ausgestaltet sein oder als Menüs, aus denen Anwendungsprogramme oder weitere Menüs aufgerufen und gestartet werden können.

Eine Ausgestaltung des Verfahrens, des Endgeräts und SIM-Karte sieht vor, dass die Kennung aufgrund einer in Zusammenhang mit der Kennung durchgeführten Nutzeraktion zum Aufbau einer Kommunikationsverbindung unter Verwendung der Kennung an die SIM-Karte übermittelt wird. Ein Vorteil dieser Ausgestaltung besteht darin, dass innerhalb der Mobilstation ein Mechanismus zum Aufbau einer Kommunikationsverbindung unter Verwendung der Kennung gestartet wird, um die Kennung an die SIM-Karte zu übermitteln. Ein solcher Mechanismus ist oftmals standardmäßig in der Mobilstation implementiert, so dass eine besondere Anpassung der Mobilstation nicht erforderlich ist, um Nutzerapplikationen zugeordnete Kennungen an die SIM-Karte zu übermitteln.

Eine Kommunikationsverbindung wird jedoch vorzugsweise nicht unter Verwendung der Kennung aufgebaut, da dies nicht beabsichtigt und in der Regel auch nicht möglich ist. Eine Ausgestaltung des Verfahrens, des Endgeräts und der SIM-Karte zeichnet sich daher dadurch aus, dass die SIM-Karte den Aufbau einer Kommunikationsverbindung unter Verwendung der Kennung blockiert. Vorteilhaft wird der Aufbau der Kommunikationsverbindung in dieser Ausgestaltung wiederum von der SIM-Karte blockiert, so dass in der Mobilstation kein Blockiermechanismus vorgesehen werden muss.

Um den gewohnten Aufbau von Kommunikationsverbindungen mittels des Endgeräts nicht zu beeinträchtigen beinhaltet eine Weiterbildung des Verfahrens, des Endgeräts und der SIM-Karte, dass aufgrund des Empfangs einer Kennung in der SIM-Karte geprüft wird, ob der empfangenen Kennung eine Nutzerapplikation zugeordnet ist, und dass ein Aufbau einer Kommunikationsverbindung unter Verwendung der Kennung erlaubt wird, wenn festgestellt wird, dass der empfangenen Kennung keine Nutzerapplikation zugeordnet ist. Dies ist insbesondere bei Kennungen der Fall, die Teilnehmerkennungen von Kommunikationspartnern entsprechen, zu denen eine Kommunikationsverbindung aufgebaut werden soll. Wenn bei der Prüfung hingegen festgestellt wird, dass der Kennung eine Nutzerapplikation zugeordnet ist, dann wird die Nutzerapplikation gestartet und der Aufbau einer Kommunikationsverbindung blockiert.

In einer Ausführungsform des Verfahrens, des Endgeräts und der SIM-Karte ist vorgesehen, dass die Kennung aufgrund eines in dem Endgerät aktivierten Dienstes an die SIM-Karte übermittelt wird, wobei durch den Dienst Verbindungsdetails einer mittels des Endgeräts aufzubauenden Kommunikationsverbindung an die SIM-Karte übermittelt werden. Derartige Dienste sind im Mobilfunk üblicherweise bereits standardmäßig vorgesehen und daher in der Regel als solche bereits in SIM-Karten und Mobilstationen implementiert. Vorteilhaft können derartige Dienste im Rahmen der Erfindung dazu genutzt werden, Kennungen an die SIM-Karte zu übermitteln. Die Implementierung eines Mechanismus zur Übergabe der den Nutzerapplikationen zugeordneten Kennungen an die SIM-Karte wird hierdurch erheblich vereinfacht.

Ein Beispiel für einen derartigen Dienst, ist die Call-Control-Funktion eines SAT (SIM Application Toolkit). Unter einem SAT wird vorliegend eine Sammlung von Diensten und Befehlen verstanden, mit denen die SIM-Karte auf die Mobilstation eines Endgeräts beziehungsweise deren Funktionen zugreifen kann. Hierbei kann es sich um ein SAT entsprechend dem GSM-Standard handeln (GSM: Global System for Mobile Communications). Der Begriff umfasst vorliegend jedoch auch vergleichbare Sammlungen in anderen Mobilfunkstandards, wie beispielsweise das in UMTS-Systemen vorgesehene USAT (UMTS: Universal Mobile Telecommunications System; USAT: USIM Application Toolkit).

Eine Weiterbildung des Verfahrens, des Endgeräts und der SIM-Karte zeichnet sich dadurch aus, dass die Kennung unter Zuordnung zu einer Bezeichnung der Nutzerapplikation in einem Telefonbuch des Endgeräts in einem Telefonbucheintrag gespeichert ist, wobei die Kennung durch eine Auswahl des Telefonbucheintrags eingegeben werden kann. Unter einem Telefonbuch des Endgeräts wird eine Anwendung verstanden, die ein Speichern von Kennungen, wie beispielsweise Rufnummern, innerhalb des Endgeräts ermöglicht. Durch eine Hinterlegung der Kennung in dem Telefonbuch wird die Auswahl der Nutzerapplikation für den Endgerätenutzer weiter vereinfacht, da er die Kennung nicht im Gedächtnis zu halten braucht. Die ebenfalls in dem Telefonbucheintrag enthaltene Bezeichnung der Nutzerapplikation vereinfacht die Identifizierung der Nutzerapplikation bzw. der zum Starten der Nutzerapplikation benötigten Kennung.

Ein Telefonbuch des Endgeräts kann von der SIM-Karte und/oder von der Mobilstation bereitgestellt werden. Die der Nutzerapplikation zugeordnete Kennung ist vorzugsweise in dem Telefonbuch der SIM-Karte gespeichert, da diese auch für die Auswertung der Kennung zuständig ist. Wiederum wird hierdurch die Unabhängigkeit von der Mobilstation gewährleistet.

Die Kennung kann, wie zuvor beschrieben, über das Telefonbuch eingegeben werden. Gleichfalls ist eine direkte Eingabe durch den Nutzer möglich. Daher umfasst eine Ausgestaltung des Verfahrens des Endgeräts und der SIM-Karte, dass die Kennung aufgrund einer Nutzereingabe an dem Endgerät erfasst wird, wobei die Nutzereingabe eine Eingabe von in der Kennung enthaltenen Zeichen oder eine Auswahl der Kennung aus dem Telefonbuch des Endgeräts umfasst.

Die Nutzerapplikation, die durch Eingabe der Kennung gestartet wird, wird in einer Ausgestaltung von der SIM-Karte bereitgestellt. Diese Ausgestaltung des Verfahrens, des Endgeräts und der SIM-Karte beinhaltet, dass die Nutzerapplikation mittels der SIM-Karte ausgeführt wird, nachdem sie gestartet worden ist. Gleichfalls kann es auch vorgesehen sein, dass die Nutzerapplikation von der Mobilstation bereitgestellt wird, auch wenn in diesem Fall, wie eingangs beschrieben, andere Mechanismen zum Starten der Applikation mittels einer Kurzwahlkennung vorgesehen werden können.

Eine weitere Ausführungsform des Verfahrens, des Endgeräts und der SIM-Karte sieht vor, dass die Nutzerapplikation die Darstellung eines SIM-Menüs an einer Benutzerschnittstelle des Endgeräts beinhaltet, wobei das SIM-Menü Einträge enthält, die ausgewählt werden können, und weitere Funktionen der SIM-Karte, insbesondere weitere von der SIM-Karte bereitgestellte Nutzerapplikationen, aufzurufen. Auf diese Weise wird die Auswahl und das Starten aller von der SIM-Karte innerhalb des SIM-Menüs bereitgestellten Nutzerapplikationen vereinfacht.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Endgeräts mit einer Erfassungsein- richtung nach der vorliegenden Erfindung, und
- Fig. 2: ein schematisches Ablaufdiagramm, welches die Auswahl und das Star- ten einer Nutzerapplikation anhand einer Kurzwahlnummer veranschau- licht.

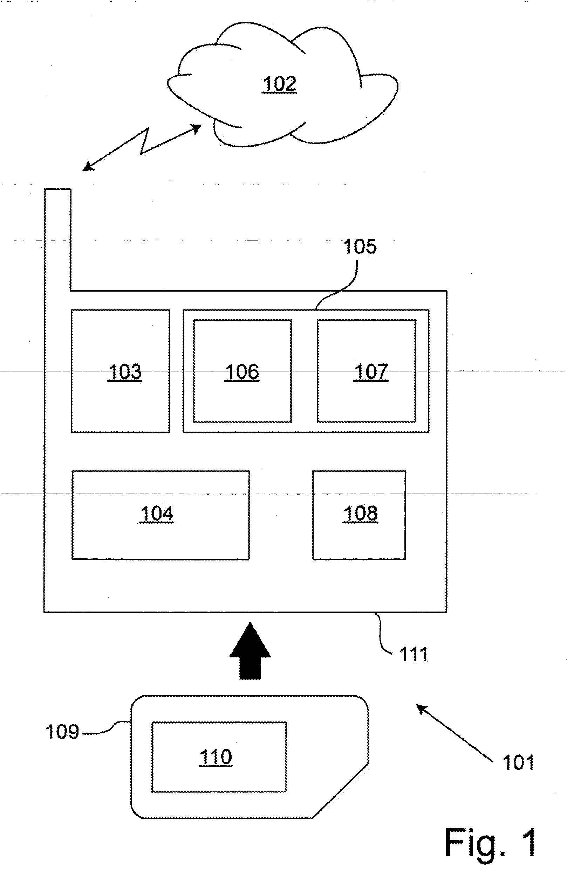

In Fig. 1 sind in einer schematischen Darstellung Komponenten eines mobilen Endgeräts 101 gezeigt, das mit einem Mobilfunknetzwerk 102 verbunden werken kann. Die Verbindung zwischen dem mobilen Endgerät 101, das etwa als ein Mobiltelefon, ein PDA (Personal Data Assistant) oder ein ähnliches Gerät ausgestaltet sein kann, und dem Mobilfunknetzwerk 102 wird drahtlos über ein in der Figur nicht dargestelltes Zugangsnetzwerk hergestellt.

Das Mobilfunknetzwerk 102 stellt Kommunikationsdienste bereit, die es erlauben, Kommunikationsverbindungen zwischen dem Endgerät 101 und einem Kommunikationspartner aufzubauen. Die Kommunikationsdienste können insbesondere einen Dienst für Sprach- und oder Videoverbindungen umfassen sowie Dienste zur Übermittlung von Nachrichten an Kommunikationspartner, wie beispielsweise SMS (Short Message Service) und MMS (Multimedia Message Service). Das Mobilfunknetzwerk 102 kann beispielsweise nach dem GSM-Standard (GSM: Global System for Mobile Communications) oder dem UMTS-Standard (UMTS: Universal Mobile Telecommunications System) ausgestaltet sein. Gleichfalls kann es sich jedoch auch um ein anders ausgestaltetes Mobilfunknetzwerk 102 handeln, in dem das mobile Endgerät 101 genutzt werden kann.

Der Aufbau von Kommunikationsverbindungen über das Mobilfunknetzwerk 102 zu einem Kommunikationspartner erfolgt in der Regel anhand einer Kennung, die den Kommunikationspartner bzw. dessen Kommunikationsgerät identifiziert. Dem Nutzer des Endgeräts 101 bzw. dem Endgerät 101 ist ebenfalls eine Kennung zugeordnet, die für den Aufbau von Kommunikationsverbindungen zu dem Endgerät 101 verwendet werden kann. Ein Kommunikationsteilnehmer besitzt in der Regel mehrere Kennungen, die jeweils zur Identifizierung bei bestimmten Kommunikationsdiensten verwendet werden. Bei Anrufen und Kurznachrichten handelt es sich bei der Kennung üblicherweise um eine Rufnummer, die eine Mehrzahl von Ziffern enthält und als MSISDN (Mobile Subscriber Integrated Services Digital Network Number) ausgestaltet ist.

Das Endgerät 101 umfasst eine Mobilstation 111 und eine in die Mobilstation 111 eingesetzte SIM-Karte 109. Zur drahtlosen Verbindung mit dem Mobilfunknetzwerk 102 weist das die Mobilstation 111 ein Funkmodul 103 auf. Das Funkmodul 103 ist in einer dem Fachmann an sich bekannten Art ausgestaltet und an das Mobilfunknetzwerk 102 angepasst. Um einem Nutzer die Bedienung des Endgeräts 101 zu ermöglichen, weist die Mobilstation 111 eine Benutzerschnittstelle 105 auf. Die Benutzerschnittstelle 105 umfasst vorzugsweise eine Anzeigeeinrichtung 106, welche beispielsweise als Display ausgestaltet sein kann. Ferner umfasst die Benutzerschnittstelle 105 eine Eingabeeinrichtung 107, bei der es sich beispielsweise um eine Tastatur handeln kann. Die Tastatur kann insbesondere Tasten umfassen, welche die Eingabe von Ziffern und/oder Buchstaben ermöglicht. Zur Durchführung von Sprach- und Videoanrufen verfügt die Mobilstation 111 über einen in der Figur nicht dargestellten Lautsprecher zur Wiedergabe von Audiosignalen sowie über ein Mikrofon zum Erfassen von Spracheingaben des Nutzers.

Die Mobilstation 111 wird durch eine Prozessoreinrichtung 104 gesteuert, die mit den übrigen Komponenten der Mobilstation 111 verbunden ist. Funktionen der Mobilstation 111 sind vorzugsweise als Softwareanwendungen implementiert, die in der Prozessoreinrichtung 104 ausgeführt werden. Die Prozessoreinrichtung 104 hat Zugriff auf eine Speichereinrichtung 108, in der Programme gespeichert werden können, die in der Prozessoreinrichtung 104 ausgeführt werden. Darüber hinaus können in der Speichereinrichtung 108 Daten gespeichert werden, welche im Betrieb des Endgeräts 101 genutzt werden.

Bei der SIM-Karte 109 handelt es sich um eine Chipkarte, die lösbar mit der Mobilstation 111 verbunden ist. Hierzu ist die SIM-Karte 109 in einen in der Figur nicht dargestellten Kartenleser der Mobilstation 111 eingesetzt. Die SIM-Karte 109 verfügt über einen Mikrocontroller 110 zum Ausführen von Programmen und zum Speichern von Daten. In dem Fachmann an sich bekannter Weise ermöglicht die SIM-Karte 109 eine Identifizierung und Authentisierung des Nutzers bzw. des Endgeräts 101 in dem Mobilfunknetzwerk 102. Hierzu stellt die SIM-Karte 109 entsprechende Funktionen und Daten bereit, die durch einen Sicherheitsmechanismus geschützt sind.

Die SIM-Karte 109 ist entsprechend dem Mobilfunknetzwerk 102 ausgestaltet, in dem das Endgerät 101 verwendet wird und wird vorzugsweise von dem Betreiber des Heimatnetzwerks des Endgerätenutzers ausgegeben, d.h. des Mobilfunknetzwerk 102 des Betreibers mit dem der Nutzer einen Mobilfunkvertrag geschlossen hat. Handelt es sich bei dem Heimatnetzwerk um ein GSM-Netzwerk, ist die SIM-Karte 109 als ein SIM (Subscriber Identity Module) nach dem GSM-Standard ausgestaltet. Sofern es sich um ein UMTS-Netzwerk handelt, enthält die SIM-Karte 109 eine USIM-Anwendung (USIM: Unversal Subscriber Identity Module) nach dem UMTS-Standard. In anderen Mobilfunknetzwerken 102 ist die SIM-Karte 109 ebenfalls der Art des Netzwerks 102 entsprechend mit einem Modul zur Identifizierung und/oder Authentifizierung des Nutzers bzw. des Endgeräts 101 ausgestattet.

In der SIM-Karte 109 ist ein Mechanismus implementiert, mit dem die SIM-Karte 109 auf das Endgerät 101 bzw. dessen Funktionen zugreifen kann. Ist die SIM-Karte 109 als SIM gemäß dem GSM-Standard ausgestaltet, handelt es sich hierbei um das SIM Application Toolkit (SAT), das insbesondere in dem 3GPP-Dokument TS 11.14 spezifiziert ist. Für ein USIM nach dem UMTS-Standard werden die entsprechenden Funktionen durch das USIM Application Toolkit (USAT) bereitgestellt, das insbesondere in dem 3GPP-Dokument TS 31.111 sowie in dem ETSI-Dokument TS 102 223 spezifiziert ist. Im Folgenden wird auf die in der SIM-Karte 109 implementierte Sammlung von SAT- oder USAT-Funktionalitäten abkürzend als SAT Bezug genommen. Hiermit ist jedoch insbesondere das USAT gemeint, wenn die SIM-Karte 109 ein USIM umfasst, oder ein vergleichbares Card Application Toolkit gemäß dem Dokument TS 102 223.

Das SAT ermöglicht der SIM-Karte 109 insbesondere auf die Anzeigeeinrichtung 106 der Mobilstation 111 zuzugreifen und Eingaben einzulesen, die mittels der Eingabeeinrichtung 107 getätigt werden. Des Weiteren stellt das SAT eine Call-Control-Funktion bereit, welche in die Vorgänge beim Aufbau eines Sprachanrufs eingreift. Wenn die Call-Control-Funktion aktiviert ist, dann werden Verbindungsdetails eines von dem Endgerätnutzer gewünschten Anrufs, insbesondere die verwendete Teilnehmerkennung bzw. Rufnummer des gewünschten Kommunikationspartners, vor dem Aufbau des Anrufs an die SIM-Karte 109 übergeben. Die SIM-Karte 109 hat dann die Möglichkeit, den Anrufaufbau zu erlauben, zu untersagen oder den Anruf bzw. die übermittelten Anrufdetails zu verändern. Auf diese Weise erhält die SIM-Karte 109 insbesondere Kenntnis von einem Anrufaufbau und erhält zudem die hierfür verwendete Teilnehmerkennung.

Darüber hinaus stellt die SIM-Karte 109 Applikationen bereit, deren Programmcode in dem Microcontroller 110 der SIM-Karte 109 gespeichert ist und die in der SIM-Karte 109 ausgeführt werden. Insbesondere handelt es sich hierbei um Nutzerapplikationen, die eine Interaktion mit dem Nutzer des Endgeräts 101 vorsehen. Beispiele für derartige SIM-Applikationen sind Spiele oder Anwendungen zur Bereitstellung von Hilfe oder Unterstützung. Weitere Beispiele sind Applikationen, die den Zugang zu Informationsdiensten des Mobilfunknetzwerks 102 ermöglichen oder vereinfachen. Im Rahmen derartiger Informationsdienste können etwa Nachrichten oder Informationen zum Wetter, zum Verkehr, in einem Abonnement oder aufgrund eines Abrufs aus dem Mobilfunknetzwerk 102 an das Endgerät 101 übermittelt werden. Sofern es sich bei der SIM-Karte 109 um eine Java-Card handelt, können die Applikationen als Java-Applikationen ausgestaltet sein. Einfachere Applikationen können beispielsweise auch mittels des SAT implementiert werden. Grundsätzlich kann jedoch jede dem Fachmann bekannte Programmiertechnologie für Chipkarten eingesetzt werden, um SIM-Applikationen zu implementieren.

SIM-Applikationen der zuvor beschriebenen Art können in der Regel über ein Menü aufgerufen werden, welches hier als SIM-Menü bezeichnet wird und innerhalb der Menüstruktur verankert ist, die Bestandteil einer graphischen Benutzeroberfläche zur Bedienung des Endgeräts 101 ist. Das SIM-Menü ist eine weitere Nutzerapplikation, die von der SIM-Karte 109 bereitgestellt wird, und umfasst eine graphische Darstellung der verfügbaren SIM-Applikationen, aus der einzelne SIM-Applikationen ausgewählt werden können, um diese zu starten.

Die Menüstruktur der graphischen Benutzeroberfläche des Endgeräts 101 ermöglicht anhand von verschiedenen Menüs den Zugriff auf die Funktionen des Endgeräts 101, das heißt auf die Funktionen der Mobilstation 111 und der SIM-Karte 109. Das SIM-Menü ist dabei innerhalb der Menüstruktur und oftmals nur nach einer Mehrzahl von Bedienaktionen erreichbar.

Um die Auswahl und das Starten von SIM-Applikationen zu vereinfachen, sind eine oder mehrere Kurzwahlkennungen vorgesehen, die jeweils einer SIM-Applikation zugeordnet sind. Die Kurzwahlkennungen umfassen eine vorgegebene Anzahl von Zeichen, die mittels der Eingabeeinrichtung 107 der Mobilstation 111 eingegeben werden können. Die Zeichen sind der Zeichenmenge entnommen, die der Eingabeeinrichtung 107 eingegeben werden können. Handelt es sich bei der Eingabeeinrichtung 107 um eine numerische Tastatur mit einigen zusätzlichen Zeichen, so sind die Kurzwahlkennungen vorzugsweise aus Ziffern und den vorhandenen zusätzlichen Zeichen aufgebaut. Falls die Eingabeeinrichtung 107 eine QWERTZ- oder QWERTY-Tastatur aufweist, so können die Kurzwahlkennungen auch Buchstaben umfassen.

Die Anzahl der in den Kurzwahlkennungen enthaltenen Zeichen ist vorzugsweise klein, damit die Kurzwahlkennungen einfacher eingegeben werden können und der Endgerätenutzer sich die Kurzwahlkennungen einfacher merken kann. Die Anzahl wird jedoch vorzugsweise auch so gewählt, dass Kurzwahlkennungen in ausreichender Anzahl erstellt werden können, um alle relevanten SIM-Applikationen aufrufen zu können. In beispielhaften Ausgestaltungen liegt die Anzahl der in den Kurzwahlkennungen enthaltenen Zeichen zwischen null und sechs, beispielsweise bei zwei. Grundsätzlich können jedoch auch längere Zeichenketten verwendet werden.

Zuordnungen zwischen den vorgesehenen Kurzwahlkennungen und den zugehörigen SIM-Applikationen sind in einer Datei und/oder Datenbank in der SIM-Karte 109 gespeichert. Dabei kann jeder von der SIM-Karte 109 bereitgestellten Applikation eine Kurzwahlkennung zugeordnet sein. Es kann jedoch auch vorgesehen sein, dass lediglich ausgewählten SIM-Applikationen Kurzwahlkennungen zugeordnet sind. Dabei empfiehlt es sich insbesondere, dem SIM-Menü eine Kurzwahlkennung zuzuordnen. Auf diese Weise kann das SIM-Menü in einfacher Weise mittels einer Kurzwahlkennung aufgerufen werden, und aus dem SIM-Menü lassen sich dann weitere SIM-Applikationen auswählen und starten. Hierdurch lassen sich alle SIM-Applikationen in einfacher Weise von dem Endgerätenutzer auswählen.

Die Kurzwahlkennungen können fest vorgegeben sein. Insbesondere können sie beispielsweise vor der Ausgabe der SIM-Karte 109 fest in dieser gespeichert sein. Gleichfalls kann es vorgesehen sein, dass Kurzwahlkennungen von dem Endgerätenutzer geändert, ergänzt und gelöscht werden können. Hierzu kann die SIM-Karte 109 eine weitere Nutzerapplikation bereitstellen, die eine graphische Benutzeroberfläche umfasst, welche die Verwaltung und Änderung von Kurzwahlkennungen ermöglicht. Diese Applikation ist in einer Ausgestaltung als SAT-Applikation ausgebildet und kann in einer Ausführungsform über das SIM-Menü ausgewählt und gestartet werden.

Um eine SIM-Applikation auszuwählen, kann der Endgerätenutzer die der SIM-Applikation zugeordnete Kurzwahlkennung mittels der Eingabeeinrichtung 107 der Mobilstation 111 eingeben. Die Auswahl einer SIM-Applikation kann jedoch dadurch vereinfacht werden, dass die zugeordnete Kurzwahlkennung in einem Telefonbuch des Endgeräts 101 gespeichert wird. Das Telefonbuch, bei dem es sich um eine Anwendung handelt, die von der Mobilstation 111 und/oder der SIM-Karte 109 bereitgestellt wird, enthält Zuordnungen zwischen Kennungen und einem oder mehreren Attributen. Die Zuordnungen sind in der Mobilstation 111 bzw. in der SIM-Karte 109 in einer Datei und/oder Datenbank gespeichert. Bei den Kennungen handelt es sich in erster Linie um Teilnehmerkennungen von Kommunikationspartnern. In Bezug auf diese Kennungen kann es sich bei dem Attribut beispielsweise um Namen der Kommunikationspartner handeln, die eine einfache Identifizierung der Kommunikationspartner ermöglichen. Durch die Auswahl eines Telefonbucheintrags der Eingabeeinrichtung 107 der Mobilstation 111 kann in der Regel eine Kommunikationsverbindung zu dem betreffenden Kommunikationspartner aufgebaut werden. Die Auswahl erfolgt üblicherweise aus einer Liste, in der ein vorgegebenes Attribut der Telefonbucheinträge angegeben wird. In ähnlicher Weise wie eine Teilnehmerkennung eines Kommunikationspartners kann vorliegend eine Kurzwahlkennung einer SIM-Applikation in dem Telefonbuch gespeichert werden, das zugehörige Attribut, das in der Regel von dem Nutzer angegeben oder verändert werden kann, kann einen Namen oder eine Beschreibung der SIM-Applikation umfassen, so dass der Endgerätenutzer den der SIM-Applikation zugeordneten Telefonbucheintrag schnell und einfach ermitteln kann.

Telefonbucheinträge mit Kurzwahlkennungen für SIM-Applikationen können bereits in einem Telefonbuch des Endgeräts 101 vorinstalliert sein. Vorzugsweise handelt es sich hierbei um das von der SIM-Karte 109 bereitgestellte Telefonbuch. Durch eine Vorinstallation von Kurzwahlkennungen von SIM-Applikationen in diesem Telefonbuch kann ein einfacher Zugriff auf die vorinstallierten SIM-Applikationen sichergestellt werden. Eine Kurzwahlkennung können dabei beispielsweise bei der Installation einer Nutzerapplikation in der SIM-Karte 109 in das Telefonbuch der SIM-Karte 109 eingebracht werden. Dies kann bei der Herstellung der SIM-Karte 109 erfolgen oder bei der Personalisierung, die in der Regel von dem bzw. für den Betreiber des Heimatmobilfunknetzwerks vorgenommen wird. Gleichfalls können Telefonbucheinträge mit SIM-Applikationen zugeordneten Kurzwahlkennungen auch von dem Endgerätenutzer erstellt oder verändert werden. Dabei kann der Endgerätenutzer Telefonbucheinträge für SIM-Applikationen wahlweise in dem von der Mobilstation 111 bereitgestellten Telefonbuch oder in dem von der SIM-Karte 109 bereitgestellten Telefonbuch erstellen.

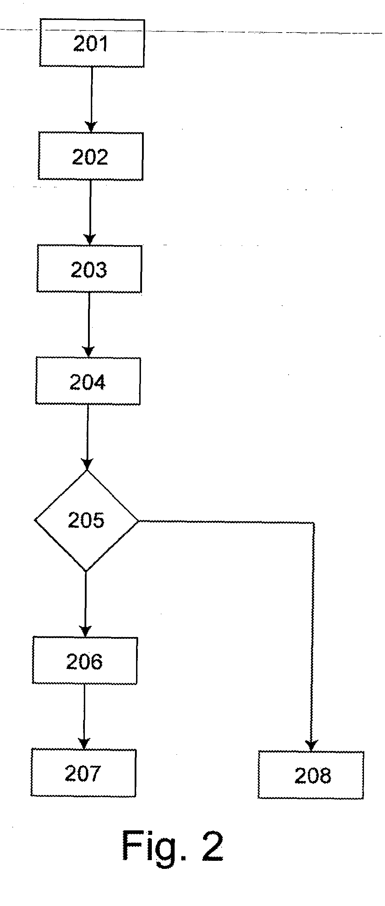

Die Auswahl und das Starten einer SIM-Applikation unter Verwendung einer Kurzwahlkennung wird im Folgenden unter Bezugnahme auf Figur 2 beschrieben. Um eine auszuführende SIM-Applikation auszuwählen, gibt der Endgerätenutzer zunächst die der SIM-Applikation zugeordnete Kurzwahlkennung an (Schritt 201). Wie zuvor erläutert, kann die Kurzwahlkennung mittels der Eingabeeinrichtung 107 der Mobilstation 111 direkt eingegeben werden, oder der Endgerätenutzer kann die Kurzwahlkennung aus einem Telefonbuch des Endgeräts 101 auswählen. Nach Eingabe oder Auswahl der Kurzwahlkennung startet der Endgerätenutzer den Aufbau eines Anrufs unter Verwendung der Kurzwahlkennung (Schritt 202). Hierzu wird in der Regel eine dem Rufaufbau zugeordnete Rufaufbautaste der Eingabeeinrichtung 107 der Mobilstation 111 betätigt. Bei manchen Endgeräten 101 kann zudem die Auswahl eines von dem Mobilfunknetzwerk 102 bereitgestellten Kommunikationsdienstes erforderlich sein, über den eine Kommunikationsverbindung aufgebaut werden soll. Ist dies der Fall, wählt der Endgerätenutzer einen Sprachanruf. In anderen Endgeräten 101 wird standardmäßig ein Sprachanruf aufgebaut. In diesem Fall ist keine zusätzliche Auswahl eines Kommunikationsdienstes erforderlich.

Nach dem Starten des Rufaufbaus werden die Verbindungsdetails aufgrund der in dem Endgerät 101 aktivierten Call-Control-Funktion an die SIM-Karte 109 übergeben (Schritt 203). Nachdem die SIM-Karte 109 die Verbindungsdetails empfangen hat, ermittelt sie die in den Verbindungsdetails enthaltene Rufnummer und vergleicht diese mit den in der SIM-Karte 109 hinterlegten Kurzwahlkennungen von SIM-Applikationen (Schritt 204). Dabei wird geprüft, ob die empfangene Rufnummer mit einer der hinterlegten Kurzwahlkennungen übereinstimmt (Schritt 205). Wenn die SIM-Karte 109 bei dem Vergleich feststellt, dass die Rufnummer einer Kurzwahlkennung entspricht, die einer SIM-Applikation zugeordnet ist, dann ermittelt die SIM-Karte 109 die der Kurzwahlkennung zugeordnete SIM-Applikation (Schritt 206). Die ermittelte SIM-Applikation wird gestartet und ausgeführt (Schritt 207). Zum Starten der Applikation wird in der SIM-Karte 109 ein entsprechender Steuerbefehl generiert und ausgeführt. Der Aufbau eines Sprachanrufs unter Verwendung der Kurzwahlkennung wird von der SIM-Karte 109 blockiert, wenn es sich bei der erhaltenen Kennung um eine Kurzwahlkennung einer Applikation handelt.

Wenn der Endgerätenutzer in dem Schritt 201 anstelle einer Kurzwahlkennung einer SIM-Applikation eine Teilnehmerkennung für einen Rufaufbau angibt, dann stellt die SIM-Karte 109 in dem Schritt 205 fest, dass die empfangene Rufnummer nicht mit einer hinterlegten Kurzwahlkennung übereinstimmt. In diesem Fall führt die SIM-Karte 109 einen Standardprozess aus, der bei Empfang einer Teilnehmerkennung vorgesehen ist (Schritt 208). Der Standardprozess kann vorsehen, dass die SIM-Karte 109 den Aufbau eines Sprachanrufs zulässt. Gleichfalls kann es jedoch auch vorgesehen sein, dass der Rufaufbau aufgrund von in der SIM-Karte 109 hinterlegten Vorschriften unabhängig von den im Zusammenhang mit SIM-Applikationen vorliegenden Vorschriften modifiziert oder blockiert wird.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Ausführen einer Nutzerapplikation in einem eine SIM-Karte (109) aufweisenden Endgerät (101), mit den folgenden Schritten:
- Bereitstellen einer Zuordnung zwischen der Nutzerapplikation und einer Kennung in der SIM-Karte (109),
- Erfassen der Kennung in dem Endgerät (101) und Übermitteln der erfassten Kennung an die SIM-Karte (109),
wobei die Kennung aufgrund einer in Zusammenhang mit der Kennung durchgeführten Nutzeraktion zum Aufbau einer Kommunikationsverbindung unter Verwendung der Kennung an die SIM-Karte (109) übermittelt wird **dadurch gekennzeichnet, dass** aufgrund des Empfangs einer Kennung in der SIM-Karte (109) durch einen Vergleich mit in der SIM-Karte hinterlegten Kennungen von Nutzerapplikationen geprüft wird, ob der empfangenen Kennung eine Nutzerapplikation zugeordnet ist,
wobei ein Aufbau einer Kommunikationsverbindung unter Verwendung der Kennung blockiert wird, wenn festgestellt wird, dass der empfangenen Kennung eine Nutzerapplikation zugeordnet ist,
dass die
Nutzerapplikation in der SIM-Karte (109) anhand der erhaltenen Kennung unter Verwendung der Zuordnung ermittelt wird und
die Nutzerapplikation mittels eines in der SIM-Karte (109) generierten Steuerbefehls gestartet wird, wenn der empfangenen Kennung eine Nutzerapplikation zugeordnet ist,
und dass ein Aufbau einer Kommunikationsverbindung unter Verwendung der Kennung erlaubt wird, wenn festgestellt wird, dass der empfangenen Kennung keine Nutzerapplikation zugeordnet ist.

2. Verfahren nach einem der vorangegangenen Ansprüche, bei dem die Kennung aufgrund eines aktivierten Dienstes an die SIM-Karte (109) übermittelt wird, wobei durch den Dienst Verbindungsdetails einer mittels des Endgeräts (101) aufzubauenden Kommunikationsverbindung an die SIM-Karte (109) übermittelt werden.

3. Verfahren nach Anspruch 5 2, wobei es sich bei dem Dienst um eine Call-Control-Funktion eines SAT handelt.

4. Verfahren nach einem der vorangegangenen Ansprüche, bei dem die Kennung unter Zuordnung zu einer Bezeichnung der Nutzerapplikation in einem Telefonbuch des Endgeräts (101) in einem Telefonbucheintrag gespeichert ist, wobei die Kennung durch eine Auswahl des Telefonbucheintrags eingegeben werden kann.

5. Verfahren nach Anspruch 4, bei dem das Telefonbuch in der SIM-Karte (109) gespeichert ist.

6. Verfahren nach einem der vorangegangenen Ansprüche, wobei die Kennung der Nutzerapplikation in dem Telefonbuch vorinstalliert ist.

7. Verfahren nach einem der vorangegangenen Ansprüche, wobei die SIM-Karte eine Nutzerapplikation bereitstellt, die eine grafische Benutzeroberfläche umfasst, welche die Verwaltung und Änderung von Kurzwahlkennungen ermöglicht.

8. Verfahren nach einem der vorangegangenen Ansprüche, bei dem die Nutzerapplikation mittels der SIM-Karte (109) ausgeführt wird, nachdem sie gestartet worden ist.

9. Verfahren nach einem der vorangegangenen Ansprüche, bei dem die Nutzerapplikation die Darstellung eines SIM-Menüs an einer Benutzerschnittstelle (105) des Endgeräts (101) beinhaltet, wobei das SIM-Menü Einträge enthält, die ausgewählt werden können, um weitere Funktionen der SIM-Karte (109) aufzurufen.

10. Endgerät (101) zum Ausführen einer Nutzerapplikation, umfassend eine SIM-Karte (109), in der eine Zuordnung zwischen der Nutzerapplikation und einer Kennung verfügbar ist und eine in der SIM-Karte (109) enthaltene Erfassungseinrichtung, die dazu ausgestaltet ist, die in dem Endgerät (101) erfasste Kennung zu empfangen, anhand der Kennung unter Verwendung der Zuordnung die Nutzeräpplikation zu ermitteln und die Nutzerapplikation mittels eines in der SIM-Karte (109) generierten Steuer befehls zu starten, wobei das Endgerät dazu ausgestaltet ist, die Kennung aufgrund einer in Zusammenhang mit der Kennung durchgeführten Nutzeraktion zum Aufbau einer Kommunikationsverbindung unter Verwendung der Kennung an die SIM-Karte (109) zu übermitteln
**dadurch gekennzeichnet, dass** das Endgerät (101) dazu ausgestaltet ist, aufgrund des Empfangs einer Kennung in der SIM-Karte (109) durch einen Vergleich mit in der SIM-Karte hinterlegten Kennungen von Nutzerapplikationen zu prüfen, ob der empfangenen Kennung eine Nutzerapplikation zugeordnet ist,
wobei ein Aufbau einer Kommunikationsverbindung unter Verwendung der Kennung blockiert wird, wenn festgestellt wird, dass der empfangenen Kennung eine Nutzerapplikation zugeordnet ist, und
wobei ein Aufbau einer Kommunikationsverbindung unter Verwendung der Kennung erlaubt wird, wenn festgestellt wird, dass der empfangenen Kennung keine Nutzerapplikation zugeordnet ist.

11. SIM-Karte (109) zur Verwendung in einem Endgerät (101), wobei in der SIM-Karte (109) eine Zuordnung zwischen der Nutzerapplikation und einer Kennung verfügbar ist und die SIM-Karte (109) eine Erfassungseinrichtung umfasst, die dazu ausgestaltet ist, die in dem Endgerät (101) erfasste Kennung zu empfangen, anhand der Kennung unter Verwendung der Zuordnung die Nutzerapplikation zu ermitteln und die Nutzerapplikation mittels eines in der SIM-Karte (109) generierten Steuerbefehls zu starten,
**dadurch gekennzeichnet**, wobei die SIM-Karte (109) dazu ausgestaltet ist, aufgrund des Empfangs einer Kennung in der SIM-Karte (109) durch einen Vergleich mit in der SIM-Karte hinterlegten Kennungen von Nutzerapplikationen zu prüfen, ob der empfangenen Kennung eine Nutzerapplikation zugeordnet ist,
wobei ein Aufbau einer Kommunikationsverbindung unter Verwendung der Kennung blockiert wird, wenn festgestellt wird, dass der empfangenen Kennung eine Nutzerapplikation zugeordnet ist, und
wobei ein Aufbau einer Kommunikationsverbindung unter Verwendung der Kennung erlaubt wird, wenn festgestellt wird, dass der empfangenen Kennung keine Nutzerapplikation zugeordnet ist.

## Claims

1. A method for executing a user application in a terminal device (101) having a SIM card (109), comprising the following steps:
• providing an association between the user application and an identifier in the SIM card (109),
• detecting the identifier in the terminal device (101) and transmitting the detected identifier to the SIM card (109),
whereby the identifier is transmitted to the SIM card (109) on the basis of a user action carried out in conjunction with the identifier in order to establish a communication connection making use of the identifier,
**characterized in that**, on the basis of the receipt of an identifier in the SIM card (109), a comparison to identifiers of user applications stored in the SIM card checks whether the received identifier is associated with a user application,
whereby the establishment of a communication connection using the identifier is blocked if it is ascertained that the received identifier is associated with a user application,
**in that** the user application in the SIM card (109) is determined on the basis of the received identifier making use of the association, and
the user application is started by means of a control command generated in the SIM card (109) if the received identifier is associated with a user application,
and **in that** the establishment of a communication connection using the identifier is permitted if it is ascertained that the received identifier is not associated with a user application.

2. The method according to one of the preceding claims, in which the identifier is transmitted to the SIM card (109) on the basis of the activation of a service, whereby connection details of a communication connection that is to be established by means of the terminal device (101) are transmitted to the SIM card (109) by the service.

3. The method according to claim 2, whereby the service is a Call-Control-Function of an SAT.

4. The method according to one of the preceding claims, in which the identifier, associated with a designation of the user application in a phone book of the terminal device (101), is stored under a phone book entry, whereby the identifier can be entered by a selection of the phone book entry.

5. The method according to claim 4, in which the phone book is stored in the SIM card (109).

6. The method according to one of the preceding claims, whereby the identifier of the user application is pre-installed in the phone book.

7. The method according to one of the preceding claims, whereby the SIM card provides a user application comprising a graphic user interface with which speed dial identifiers can be managed and edited.

8. The method according to one of the preceding claims, in which the user application is executed by means of the SIM card (109) after said application has been started.

9. The method according to one of the preceding claims, in which the user application entails the display of a SIM menu on a user interface (105) of the terminal device (101), whereby the SIM menu contains entries that can be selected in order to call up additional functions of the SIM card (109).

10. A terminal device (101) for executing a user application, having a SIM card (109) in which an association between the user application and an identifier is available and having a detection means that is contained in the SIM card (109) and that is configured to receive the identifier detected in the terminal device (101), to determine the user application on the basis of the identifier making use of the association, and to start the user application by means of a control command generated in the SIM card (109), whereby the terminal device is configured to transmit the identifier to the SIM card (109) on the basis of a user action carried out in conjunction with the identifier in order to establish a communication connection making use of the identifier,
**characterized in that**, on the basis of the receipt of an identifier in the SIM card (109), the terminal device (101) is configured to make a comparison to identifiers of user applications stored in the SIM card in order to check whether the received identifier is associated with a user application,
whereby the establishment of a communication connection using the identifier is blocked if it is ascertained that the received identifier is associated with a user application, and
whereby the establishment of a communication connection using the identifier is permitted if it is ascertained that the received identifier is not associated with a user application.

11. A SIM card (109) for use in a terminal device (101), whereby an association between the user application and an identifier is available in the SIM card (109), and the SIM card (109) comprises a detection means that is configured to receive the identifier detected in the terminal device (101), to receive the identifier detected in the terminal device (101), to determine the user application on the basis of the identifier making use of the association, and to start the user application by means of a control command generated in the SIM card (109),
**characterized in that**, on the basis of the receipt of an identifier in the SIM card (109), the latter is configured to make a comparison to identifiers of user applications stored in the SIM card in order to check whether the received identifier is associated with a user application,
whereby the establishment of a communication connection using the identifier is blocked if it is ascertained that the received identifier is associated with a user application, and
whereby the establishment of a communication connection using the identifier is permitted if it is ascertained that the received identifier is not associated with a user application.

## Revendications

1. Procédé pour exécuter une application d'utilisateur dans un terminal (101) comportant une carte SIM (109), comportant les étapes suivantes :
- fourniture d'une association entre l'application d'utilisateur et un identifiant sur la carte SIM (109),
- détection de l'identifiant dans le terminal (101) et transmission de l'identifiant détecté à la carte SIM (109),
l'identifiant étant transmis à la carte SIM (109) en raison d'une action de l'utilisateur effectuée en rapport avec l'identifiant pour établir une liaison de communication en utilisant l'identifiant,
**caractérisé en ce que**, en raison de la réception d'un identifiant sur la carte SIM (109), il est vérifié, par une comparaison avec des identifiants d'applications d'utilisateurs déposés sur la carte SIM, si une application d'utilisateur est associée à l'identifiant reçu,
l'établissement d'une liaison de communication avec utilisation de l'identifiant étant bloqué s'il est constaté qu'une application d'utilisateur est associée à l'identifiant reçu,
**en ce que** l'application d'utilisateur est déterminée sur la carte SIM (109) à l'aide de l'identifiant reçu en utilisant l'association et
est lancée au moyen d'un ordre de commande généré sur la carte SIM (109) lorsqu'une application d'utilisateur est associée à l'identifiant reçu, et
**en ce que** l'établissement d'une liaison de communication avec utilisation de l'identifiant est autorisé s'il est constaté qu'aucune application d'utilisateur n'est associée à l'identifiant reçu.

2. Procédé selon l'une des revendications précédentes, selon lequel l'identifiant, en raison un service activé, est transmis à la carte SIM (109), des détails d'une liaison de communication à établir au moyen du terminal (101) étant transmis par le service à la carte SIM (109).

3. Procédé selon la revendication 2, le service étant une fonction de contrôle d'appel d'un kit d'outils d'application SIM (SAT).

4. Procédé selon l'une des revendications précédentes, selon lequel l'identifiant est stocké dans une entrée d'annuaire téléphonique tout en étant associé à une désignation de l'application d'utilisateur dans un annuaire téléphonique du terminal (101), l'identifiant pouvant être saisi par une sélection de l'entrée d'annuaire téléphonique.

5. Procédé selon la revendication 4, selon lequel l'annuaire téléphonique est stocké sur la carte SIM (109).

6. Procédé selon l'une des revendications précédentes, selon lequel l'identifiant de l'application d'utilisateur est préinstallé dans l'annuaire téléphonique.

7. Procédé selon l'une des revendications précédentes, selon lequel la carte SIM fournit une application d'utilisateur qui comprend une surface d'utilisateur graphique qui permet la gestion et la modification d'identifiants de numérotation abrégés.

8. Procédé selon l'une des revendications précédentes, selon lequel l'application d'utilisateur est exécutée au moyen de la carte SIM (109) après avoir été lancée.

9. Procédé selon l'une des revendications précédentes, selon lequel l'application d'utilisateur contient la représentation d'un menu SIM au niveau d'une interface d'utilisateur (105) du terminal (101), le menu SIM contenant des entrées qui peuvent être sélectionnées pour appeler d'autres fonctions de la carte SIM (109).

10. Terminal (101) pour exécuter une application d'utilisateur, comportant une carte SIM (109) sur laquelle une association entre l'application d'utilisateur et un identifiant est disponible, et un dispositif de détection contenu sur la carte SIM (109), lequel est conçu pour recevoir l'identifiant détecté dans le terminal (101), déterminer l'application d'utilisateur à l'aide de l'identifiant en utilisant l'association, et lancer l'application d'utilisateur au moyen d'un ordre de commande généré sur la carte SIM (109), le terminal étant conçu pour transmettre l'identifiant à la carte SIM (109) en raison d'une action de l'utilisateur effectuée en rapport avec l'identifiant pour établir une liaison de communication en utilisant l'identifiant, **caractérisé en ce que** le terminal (101) est conçu pour vérifier, étant donné la réception d'un identifiant sur la carte SIM (109), par une comparaison avec des identifiants d'applications d'utilisateurs déposés sur la carte SIM, si une application d'utilisateur est associée à l'identifiant reçu,
l'établissement d'une liaison de communication avec utilisation de l'identifiant étant bloqué s'il est constaté qu'une application d'utilisateur est associée à l'identifiant reçu et
l'établissement d'une liaison de communication avec utilisation de l'identifiant étant autorisé s'il est constaté qu'aucune application d'utilisateur n'est associée à l'identifiant reçu.

11. Carte SIM (109) destinée à être utilisée dans un terminal (101), une association entre l'application d'utilisateur et un identifiant étant disponible sur la carte SIM (109) et la carte SIM (109) comprenant un dispositif de détection conçu pour recevoir l'identifiant détecté dans le terminal (101), déterminer l'application d'utilisateur à l'aide de l'identifiant en utilisant l'association, et lancer l'application d'utilisateur au moyen d'un ordre de commande généré sur la carte SIM (109), **caractérisée en ce que** la carte SIM (109) est conçue pour vérifier, en raison la réception d'un identifiant sur la carte SIM (109), par une comparaison avec des identifiants d'applications d'utilisateurs déposés sur la carte SIM, si une application d'utilisateur est associée à l'identifiant reçu,
l'établissement d'une liaison de communication avec utilisation de l'identifiant étant bloqué s'il est constaté qu'une application d'utilisateur est associée à l'identifiant reçu et
l'établissement d'une liaison de communication avec utilisation de l'identifiant étant autorisé s'il est constaté qu'aucune application d'utilisateur n'est associée à l'identifiant reçu.
